# EUROPEAN PATENT APPLICATION

(11) **EP 4 542 606 A1**
(43) Date of publication of application: **23.04.2025**
(21) Application number: 23204305.9
(22) Date of filing: 18.10.2023
(51) Int. Cl.: H01H 9/48, H01H 33/24, H01H 33/662, H02B 1/56, H02B 13/02, H02G 5/10

(54) **LOW VOLTAGE SWITCHGEAR OR MEDIUM VOLTAGE SWITCHGEAR OR HIGH VOLTAGE SWITCHGEAR**

(71) Applicant: ABB SCHWEIZ AG, 5400 Baden (CH)
(72) Inventor: EMLER, Soeren, 45259 Essen (DE)
(74) Representative: Maiwald GmbH

(57) **Abstract**

The present invention relates to a low voltage switchgear or medium voltage switchgear or high voltage switchgear, comprising:
- an insulator body (20); and
- an electrically conductive plastic dowel (10);
wherein the insulator body comprises the electrically conductive plastic dowel is located;
wherein the electrically conductive plastic dowel is configured to connect to earth potential; and
wherein the electrically conductive plastic dowel is configured to enable a screw or bolt to be screwed into the electrically conductive plastic dowel.

## Description

### FIELD OF THE INVENTION

The present invention relates to a low voltage switchgear or medium voltage switchgear or high voltage switchgear and fixation system for a low voltage switchgear or medium voltage switchgear or high voltage switchgear and an insulator housing.

### BACKGROUND OF THE INVENTION

Insulating parts of a switchgear need to be fixed to other parts and parts, when required, need to be fixed to the switchgear.

Epoxy parts or housings are used for these purposes.

Therefore, screws are used to guarantee a good and safe connection between the earthed metal parts of the drive or switchgear housing and the epoxy part. For thermoplastic pole parts, self-cutting screws are directly screwed into a hole in the insulating material of the pole part. There are then sharp edges at the thread from the screw, and exposure to operational voltages of the switchgear leads to high electrical field density and the potential for partial discharge. To mitigate this a conducting layer can be utilized as described in US11322864.

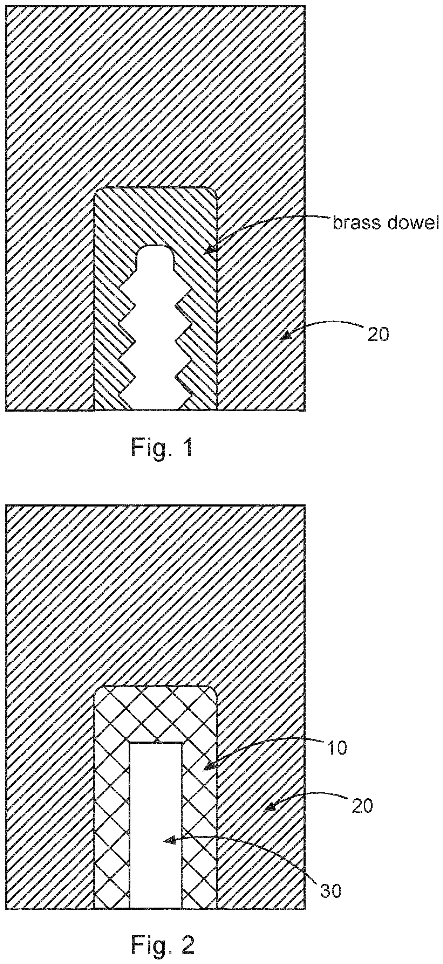

Instead of direct screwing with self-cutting screws into a hole in epoxy resin, which is difficult to realize, epoxy parts used in low, medium and high voltage applications can have brass dowels, which are molded directly in the epoxy resin, as shown in Fig. 1. These brass dowels have different internal shapes to accommodate different screws for fixing these epoxy parts with a housing of switchgear or any kind of drive. Again, to avoid dielectric problems, the dowels being of brass are electrically conductive to enhance the performance and prevent partial discharges in the thread-area. However, the internal thread of a brass dowel may not match the thread of a screw that is required to be used.

There is a need to address these issues.

### SUMMARY OF THE INVENTION

Therefore, it would be advantageous to have an improved way of fixing parts to and within a switchgear.

The object of the present invention is solved with the subject matter of the independent claims, wherein further embodiments are incorporated in the dependent claims.

In a first aspect, there is provided a low voltage switchgear or medium voltage switchgear or high voltage switchgear, comprising:
- an insulator body; and
- an electrically conductive plastic dowel.
The insulator body comprises the electrically conductive plastic dowel. The electrically conductive plastic dowel is configured to connect to earth potential. The electrically conductive plastic dowel is configured to enable a screw or bolt to be screwed into the electrically conductive plastic dowel.

In an example, the electrically conductive plastic dowel is embedded within the insulator body.

In an example, the electrically conductive plastic dowel is moulded within the insulator body.

Thus, for example the electrically conductive plastic dowel can be directly moulded within the insulator body, such as within epoxy resin.

In an example, the electrically conductive plastic dowel comprises a hole. The electrically conductive plastic dowel is configured to enable the screw or bolt to be screwed into the electrically conductive plastic dowel via the screw or bolt being screwed into the hole.

In an example, the hole in the electrically conductive plastic dowel is not threaded prior to the screw being screwed into the hole.

In an example, the hole in the electrically conductive plastic dowel is threaded prior to the screw or the bolt being screwed into the hole.

In an example, the insulator body comprises epoxy resin.

In an example, the electrically conductive plastic dowel comprises electrically conductive thermoplastic.

In an example, the electrically conductive plastic dowel is configured to connect to earth potential via another part that is directly connected to earth potential.

In a second aspect, there is provided a fixation system for a low voltage switchgear or medium voltage switchgear or high voltage switchgear, the system comprising:
- an insulator body; and
- an electrically conductive plastic dowel; and
a screw or bolt.
The insulator body comprises the electrically conductive plastic dowel. The electrically conductive plastic dowel is configured to connect to earth potential. The electrically conductive plastic dowel is configured to enable the screw or the bolt to be screwed into the electrically conductive plastic dowel.

In an example, the electrically conductive plastic dowel is embedded within the insulator body.

In an example, the electrically conductive plastic dowel is moulded within the insulator body.

Thus, for example the electrically conductive plastic dowel can be directly moulded within the insulator body, such as within epoxy resin.

In an example, the electrically conductive plastic dowel comprises a hole. The electrically conductive plastic dowel is configured to enable the screw or bolt to be screwed into the electrically conductive plastic dowel via the screw or the bolt being screwed into the hole.

In an example, the hole in the electrically conductive plastic dowel is not threaded prior to the screw being screwed into the hole.

In an example, the hole in the electrically conductive plastic dowel is threaded prior to the screw or the bolt being screwed into the hole.

In an example, the insulator body comprises epoxy resin.

In an example, the electrically conductive plastic dowel comprises electrically conductive thermoplastic.

In an example, the electrically conductive plastic dowel is configured to connect to earth potential via another part that is directly connected to earth potential.

In an example, the electrically conductive plastic dowel is configured to connect to earth potential via the screw or the bolt.

In a third aspect, there is provided an insulator housing, comprising:
- an insulator body; and
- an electrically conductive plastic dowel.

The insulator body comprises the electrically conductive plastic dowel. The electrically conductive plastic dowel is configured to connect to earth potential. The electrically conductive plastic dowel is configured to enable a screw or bolt to be screwed into the electrically conductive plastic dowel to connect the insulator body to a low voltage switchgear or medium voltage switchgear or high voltage switchgear.

In an example, the electrically conductive plastic dowel is embedded within the insulator body.

In an example, the electrically conductive plastic dowel is moulded within the insulator body.

Thus, for example the electrically conductive plastic dowel can be directly moulded within the insulator body, such as within epoxy resin.

The above aspect and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic representation of a known insulator housing; and
Fig. 2 shows a schematic representation of a new insulator housing.

### DETAILED DESCRIPTION OF EMBODIMENTS

The new low voltage switchgear or medium voltage switchgear or high voltage switchgear, new fixation system for a low voltage switchgear or medium voltage switchgear or high voltage switchgear and new insulator housing are now described, where reference is made to Fig. 2 that shows a schematic representation of a new insulator housing.

In an example a new low voltage switchgear or medium voltage switchgear or high voltage switchgear comprises:
- an insulator body 20; and
- an electrically conductive plastic dowel 10.
The insulator body comprises the electrically conductive plastic dowel. The electrically conductive plastic dowel is configured to connect to earth potential. The electrically conductive plastic dowel is configured to enable a screw or bolt to be screwed into the electrically conductive plastic dowel.

Thus, the switchgear has an appropriate connector that enables required parts to be safely connected to or mounted the switchgear.

In an example, the electrically conductive plastic dowel is embedded within the insulator body.

In an example, the electrically conductive plastic dowel is moulded within the insulator body.

Thus, for example the electrically conductive plastic dowel can be directly moulded within the insulator body, such as within epoxy resin.

The electrically conductive plastic dowel 10 could in effect be a solid block and a screw could be screwed into it and form its own hole. Fig. 2 shows the electrically conductive plastic dowel 10 in a schematic view, and the actual outer shape can be as required for the purpose, as would be appreciated by the skilled person.

Or the electrically conductive plastic dowel could in effect be a solid block and an operator drills a hole 30 and then screws a self tapping screw into the hole.

Or the electrically conductive plastic dowel could in effect be a solid block and an operator drills a hole 30 and then uses a tap and die to make a thread in the hole and then screws a screw on bolt into the hole.

Or the electrically conductive plastic dowel could in effect be a solid block with a smooth sided hole 30 in the block and a self tapping screw can be screwed into the hole.

Or the electrically conductive plastic dowel could in effect be a solid block with a smooth sided hole 30 in the block and an operator uses a tap and die to make a thread in the hole and then screws a screw on bolt into the hole.

Or the electrically conductive plastic dowel could in effect be a solid block with a threaded hole 30 in the block and a screw or bolt can be screwed into the hole.

In an example, the electrically conductive plastic dowel comprises a hole 30. The electrically conductive plastic dowel is configured to enable the screw or bolt to be screwed into the electrically conductive plastic dowel via the screw or bolt being screwed into the hole.

In an example, the hole in the electrically conductive plastic dowel is not threaded prior to the screw being screwed into the hole.

In an example, the hole in the electrically conductive plastic dowel is threaded prior to the screw or the bolt being screwed into the hole.

In an example, the insulator body comprises epoxy resin.

In an example, the electrically conductive plastic dowel comprises electrically conductive thermoplastic.

In an example, the electrically conductive plastic dowel is configured to connect to earth potential via another part that is directly connected to earth potential.

In an example a new fixation system for a low voltage switchgear or medium voltage switchgear or high voltage switchgear comprises:
- an insulator body 20;
- an electrically conductive plastic dowel 10; and
a screw or bolt.
The insulator body comprises the electrically conductive plastic dowel. The electrically conductive plastic dowel is configured to connect to earth potential. The electrically conductive plastic dowel is configured to enable the screw or the bolt to be screwed into the electrically conductive plastic dowel.

In an example, the electrically conductive plastic dowel is embedded within the insulator body.

In an example, the electrically conductive plastic dowel is moulded within the insulator body.

Thus, for example the electrically conductive plastic dowel can be directly moulded within the insulator body, such as within epoxy resin.

In an example, the electrically conductive plastic dowel comprises a hole 30. The electrically conductive plastic dowel is configured to enable the screw or bolt to be screwed into the electrically conductive plastic dowel via the screw or the bolt being screwed into the hole.

In an example, the hole in the electrically conductive plastic dowel is not threaded prior to the screw being screwed into the hole.

In an example, the hole in the electrically conductive plastic dowel is threaded prior to the screw or the bolt being screwed into the hole.

In an example, the insulator body comprises epoxy resin.

In an example, the electrically conductive plastic dowel comprises electrically conductive thermoplastic.

In an example, the electrically conductive plastic dowel is configured to connect to earth potential via another part that is directly connected to earth potential.

In an example, the electrically conductive plastic dowel is configured to connect to earth potential via the screw or the bolt.

In an example a new insulator housing comprises:
- an insulator body 20; and
- an electrically conductive plastic dowel 10.
The insulator body comprises the electrically conductive plastic dowel. The electrically conductive plastic dowel is configured to connect to earth potential. The electrically conductive plastic dowel is configured to enable a screw or bolt to be screwed into the electrically conductive plastic dowel to connect the insulator body to a low voltage switchgear or medium voltage switchgear or high voltage switchgear.

Thus, a part to be connected or mounted to a switchgear has an appropriate connector that enables this part to be safely connected to or mounted to the switchgear.

In an example, the electrically conductive plastic dowel is embedded within the insulator body.

In an example, the electrically conductive plastic dowel is moulded within the insulator body.

Thus, for example the electrically conductive plastic dowel can be directly moulded within the insulator body, such as within epoxy resin.

In an example, the electrically conductive plastic dowel comprises a hole 30. The electrically conductive plastic dowel is configured to enable the screw or bolt to be screwed into the electrically conductive plastic dowel via the screw or bolt being screwed into the hole.

In an example, the hole in the electrically conductive plastic dowel is not threaded prior to the screw being screwed into the hole.

In an example, the hole in the electrically conductive plastic dowel is threaded prior to the screw or the bolt being screwed into the hole.

In an example, the insulator body comprises epoxy resin.

In an example, the electrically conductive plastic dowel comprises electrically conductive thermoplastic.

In an example, the electrically conductive plastic dowel is configured to connect to earth potential via another part that is directly connected to earth potential.

Thus, rather than having to use a conductive layer within a plastic insulator or use an expensive, and inflexible, brass dowel the inventors realised that a conductive thermoplastic dowel could be used within an insulator body, such as epoxy resin. Not only is utility of connection and mounting provided, but the solution is more cost effective.

The electrically conductive thermoplastic dowels are described in more detail with respect to:
o Thermoplastic dowels have, in comparison to brass dowels, lower weight
o Thermoplastic parts are easier to produce
o Thermoplastic dowels are cheaper in comparison to brass dowels
o partial discharge is mitigated, that could otherwise occur in the thread area and at the end of hole where a higher electric field can be obtained
o self-cutting screws can be used, same as for thermoplastic pole parts

In summary:
Electrically conductive thermoplastic dowels without a thread are used for connecting and mounting of epoxy parts to low, medium and high voltage switchgear housings, panels or drives.

## Claims

1. A low voltage switchgear or medium voltage switchgear or high voltage switchgear, comprising:
- an insulator body (20); and
- an electrically conductive plastic dowel (10);
wherein the insulator body comprises the electrically conductive plastic dowel;
wherein the electrically conductive plastic dowel is configured to connect to earth potential; and
wherein the electrically conductive plastic dowel is configured to enable a screw or bolt to be screwed into the electrically conductive plastic dowel.

2. Low voltage switchgear or medium voltage switchgear or high voltage switchgear according to claim 1, wherein the electrically conductive plastic dowel comprises a hole (30), and the electrically conductive plastic dowel is configured to enable the screw or bolt to be screwed into the electrically conductive plastic dowel via the screw or bolt being screwed into the hole.

3. Low voltage switchgear or medium voltage switchgear or high voltage switchgear according to claim 2, wherein the hole in the electrically conductive plastic dowel is not threaded prior to the screw being screwed into the hole.

4. Low voltage switchgear or medium voltage switchgear or high voltage switchgear according to claim 2, wherein the hole in the electrically conductive plastic dowel is threaded prior to the screw or the bolt being screwed into the hole.

5. Low voltage switchgear or medium voltage switchgear or high voltage switchgear according to any of claims 1-4, wherein the insulator body comprises epoxy resin.

6. Low voltage switchgear or medium voltage switchgear or high voltage switchgear according to any of claims 1-5, wherein the electrically conductive plastic dowel comprises electrically conductive thermoplastic.

7. Low voltage switchgear or medium voltage switchgear or high voltage switchgear according to any of claims 1-5, wherein the electrically conductive plastic dowel is configured to connect to earth potential via another part that is directly connected to earth potential.

8. A fixation system for a low voltage switchgear or medium voltage switchgear or high voltage switchgear, the system comprising:
- an insulator body (20); and
- an electrically conductive plastic dowel (10); and
- a screw or bolt;
wherein the insulator body comprises the electrically conductive plastic dowel;
wherein the electrically conductive plastic dowel is configured to connect to earth potential; and
wherein the electrically conductive plastic dowel is configured to enable the screw or the bolt to be screwed into the electrically conductive plastic dowel.

9. System according to claim 8, wherein the electrically conductive plastic dowel comprises a hole (30), and the electrically conductive plastic dowel is configured to enable the screw or bolt to be screwed into the electrically conductive plastic dowel via the screw or the bolt being screwed into the hole.

10. System according to claim 9, wherein the hole in the electrically conductive plastic dowel is not threaded prior to the screw being screwed into the hole.

11. System to claim 9, wherein the hole in the electrically conductive plastic dowel is threaded prior to the screw or the bolt being screwed into the hole.

12. System according to any of claims 8-11, wherein the insulator body comprises epoxy resin.

13. System according to any of claims 8-12, wherein the electrically conductive plastic dowel comprises electrically conductive thermoplastic.

14. System according to any of claims 8-13, wherein the electrically conductive plastic dowel is configured to connect to earth potential via another part that is directly connected to earth potential or wherein the electrically conductive plastic dowel is configured to connect to earth potential via the screw or the bolt.

15. An insulator housing, comprising:
- an insulator body (20); and
- an electrically conductive plastic dowel (10);
wherein the insulator body comprises the electrically conductive plastic dowel;
wherein the electrically conductive plastic dowel is configured to connect to earth potential; and
wherein the electrically conductive plastic dowel is configured to enable a screw or bolt to be screwed into the electrically conductive plastic dowel to connect the insulator body to a low voltage switchgear or medium voltage switchgear or high voltage switchgear.
